(19) Europäisches Patentamt
European Patent Office
Office européen des brevets

(11) **EP 2 144 354 A1**

(12) **EUROPEAN PATENT APPLICATION**

(43) Date of publication:
**13.01.2010 Bulletin 2010/02**

(51) Int Cl.:
**H02M 3/156** $^{(2006.01)}$

(21) Application number: **08159996.1**

(22) Date of filing: **09.07.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **TELLABS DENMARK A/S**
**2750 Ballerup (DK)**

(72) Inventor: **Glerskov, Christian**
**2605 Brøndby (DK)**

(74) Representative: **Boesen, Johnny Peder**
**Zacco Denmark A/S**
**Hans Bekkevolds Allé 7**
**2900 Hellerup (DK)**

(54) **DC voltage supply for a load**

(57)     A method of supplying a DC voltage to a load (10) from a supply circuit (14), where the supplied voltage is controlled in dependence on a control signal generated from a first feedback signal (FB1) indicative of the supplied voltage, comprises the steps of determining a second feedback signal (FB2) indicative of a current supplied from the supply circuit (14); multiplying said first and second feedback signals to obtain a multiplied signal; and generating said control signal from said multiplied signal. In this way, the output will be regulated to keep the product of the supplied voltage and the supplied current constant. The power is proportional to this product and will thus also be maintained constant. When the input voltage is considered to be constant, the input current will be maintained constant, and thus variations in the load current are prevented from being transferred to the input side of the power supply.

Fig. 6

**Description**

The invention relates to a method of supplying a DC voltage to a load from a supply circuit. The invention further relates to a circuit configured to supply a DC voltage to a load, to an integrated circuit and to use of the circuit for reducing noise in supply lines from a DC voltage source to a DC motor.

DC power supplies are widely used for supplying power to electronic devices, e.g. computers or telecommunications equipment, and other equipment such as electric motors in e.g. disk drives or cooling fans for electronic equipment. Such devices often require a specific voltage level different from that supplied by e.g. a battery or an external supply. The required voltage can be lower or higher than the supplied voltage, or even a voltage of opposite polarity could be required. Many different supply types exist, ranging from AC to DC converters to DC to DC converters. The latter include e.g. linear regulators and switched-mode converters, such as buck converters (step-down), boost converters (step-up) or buck-boost converters.

Since input voltage and other parameters for such supplies may vary over time, a form of feedback control is normally used to maintain a constant output voltage. The current consumption of devices supplied from the supplies may often vary abruptly. As examples, the current consumption of a computer varies with its use and the current consumption of a DC motor exhibits short interruptions related to the rotation speed of the motor. Such current variations are typically transferred from the output side to the input side of the power supply, where they appear as noise in the supply lines to the power supply. The feedback regulation to maintain a constant output voltage does not prevent the current variations from being transferred to the input side.

Therefore, it is an object of the invention to provide a method of supplying a DC voltage to a load, in which variations in the load current can be prevented from being transferred to the input side of the power supply, or at least be attenuated to an acceptable level.

According to the invention the object is achieved in a method of supplying a DC voltage to a load from a supply circuit, wherein the supplied DC voltage is controlled in dependence on a control signal generated from a first feedback signal indicative of the supplied DC voltage. The method further comprises the steps of determining a second feedback signal indicative of a current supplied from the supply circuit; multiplying said first feedback signal by said second feedback signal to obtain a multiplied signal; and generating said control signal from said multiplied signal.

When the control signal is generated from the product of a feedback signal indicative of the supplied DC voltage and a feedback signal indicative of a current supplied from the supply circuit, the output will be regulated to keep this product constant. The output power as well as the input power are proportional to this product and will thus also be maintained constant. When the input voltage from which the supplied DC voltage is generated is also considered to be constant, it means that the input current will be maintained constant, and thus that variations in the load current can be prevented from being transferred to the input side of the power supply.

In an expedient embodiment the step of determining a second feedback signal comprises measuring a voltage drop over a current sensing resistor arranged to be passed by said current supplied from the supply circuit; and amplifying said voltage drop in an amplifier. Alternatively, the voltage drop over the current sensing resistor can be used directly as the second feedback signal.

When the method further comprises the step of arranging a capacitor in parallel to the load, the ability to prevent load current variations from being transferred to the input side can be improved for larger variations, e.g. load current interruptions. The capacitor may be selected to have a capacity sufficient to store an amount of energy corresponding to a given temporary current drop in the load.

As mentioned, the invention also relates to a circuit configured to supply a DC voltage to a load, wherein the supplied DC voltage is controlled in dependence on a control signal generated from a first feedback signal indicative of the supplied DC voltage. When the circuit further comprises means for determining a second feedback signal indicative of a current supplied from the supply circuit; means for multiplying said first feedback signal by said second feedback signal to obtain a multiplied signal; and means for generating said control signal from said multiplied signal, the output will be regulated to keep the product of the two feedback signals constant. As mentioned above, the output power as well as the input power are proportional to this product and will thus also be maintained constant. When the input voltage to the circuit is also considered to be constant, it means that the input current will be maintained constant, and thus that variations in the load current can be prevented from being transferred to the input side of the circuit.

In an expedient embodiment the means for determining a second feedback signal comprises a current sensing resistor arranged to be passed by said current supplied from the supply circuit; and an amplifier arranged to amplify a voltage drop over said current sensing resistor. Alternatively, the voltage drop over the current sensing resistor can be used directly as the second feedback signal.

When the circuit further comprises a capacitor arranged in parallel to the load, the ability to prevent load current variations from being transferred to the input side can be improved for larger variations, e.g. load current interruptions. The capacitor may be selected to have a capacity sufficient to store an amount of energy corresponding to a given temporary current drop in the load.

The circuit can be a DC to DC converter, such as a linear converter or a switched mode converter. The latter can be a buck converter. Alternatively, the circuit can be an AC to DC converter.

The invention also relates to an integrated circuit comprising control circuitry for a circuit as described above. The integrated circuit may comprise the means for multiplying the first feedback signal by the second feedback signal.

The invention also relates to use of a circuit as described above for reducing noise in supply lines from a DC voltage source to a DC motor. The circuit is connected between the DC voltage source and the DC motor.

The invention will now be described more fully below with reference to the drawings, in which

Figures 1 a and 1 b show a DC motor and the current through the motor;

Figures 2a and 2b show the motor of Figure 1 with a filter for attenuating current noise and the corresponding current;

Figures 3a and 3b show the motor of Figure 1 with a filter and a DC to DC converter for attenuating current noise and the corresponding current;

Figure 4 shows an example of a known DC to DC converter;

Figure 5 shows an example of a known DC to DC converter with feedback for maintaining a constant output voltage;

Figure 6 shows an improved DC to DC converter with a feedback signal proportional to the product of output voltage and output current;

Figure 7 illustrates voltages and currents in the known circuit of Figure 5 when load resistance is increased for a short period;

Figure 8 illustrates voltages and currents in the improved circuit of Figure 6 when load resistance is increased for a short period;

Figure 9 illustrates voltages and currents in the known circuit of Figure 5 when load resistance is disconnected for a short period;

Figure 10 illustrates voltages and currents in the improved circuit of Figure 6 when load resistance is disconnected for a short period;

Figure 11 shows the circuit of Figure 6 with an added capacitor;

Figures 12a to 12c illustrate voltages and currents in the circuit of Figure 11 for different capacitor values when load resistance is increased for a short period;

Figures 13a to 13c illustrate voltages and currents in the circuit of Figure 11 for different capacitor values when load resistance is disconnected for a short period;

Figure 14 shows an alternative embodiment of the circuit of Figure 11; and

Figure 15 shows the use of an integrated control circuit in the circuit of Figure 6.

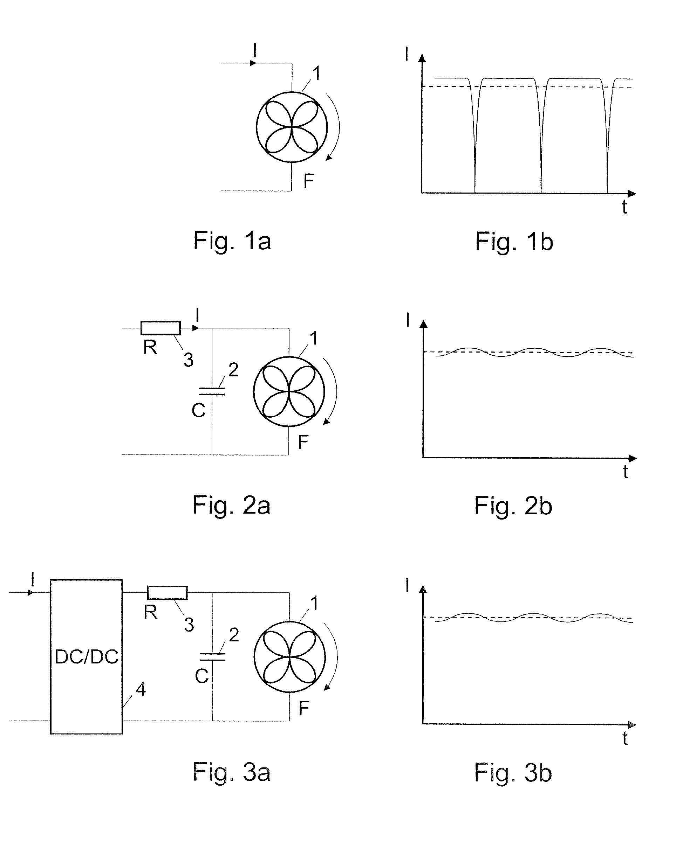

One example of a situation where the invention can be used is DC motors, which are used e.g. in fans for cooling electronic equipment. Such motors have several advantages, but also some drawbacks, including variation in current consumption related to the rotation speed of the motor. Figure 1 a shows an example of a cooling fan with a DC motor 1. As illustrated in Figure 1b, the current through the motor will be a pulsating current, because due to magnetisation and demagnetisation of the internal parts of the motor, such as the stator and the rotor of the motor, the current will be interrupted for short periods at intervals corresponding to the rotation speed. These current variations are considered as noise in the supply lines to the motor, and such noise should be avoided, because it can be transmitted to electronic equipment connected to the same supply lines or arranged nearby. The frequency of the noise of course depends on the rotation speed of the motor. It will normally be in the frequency range 25 Hz - 20 kHz, and such noise is also known as psophometric noise. A typical value could be 100 Hz.

The same problems exist for other loads having a varying or pulsating current consumption.

To a certain degree this noise can be attenuated by means of filter components, which however cause a loss of power and complicate the regulation of the rotation speed of the motor. An example is shown in Figure 2a, where a capacitor 2 is connected across the motor 1, and a resistor 3 is connected in series with the capacitor and the motor, such that a low pass filter is formed. It is noted that at this frequency it would not be practical to use an inductor instead of the resistor 3. During the interruptions of the motor current, current from the power source is instead supplied into the capacitor 2, and thus the current spikes from Figure 1b will be smoothed, and the resulting current from the power source could be as illustrated in Figure 2b. As it can be seen, there will still be a certain ripple in the current, unless a very large capacitor is used.

Often a DC to DC converter is used for supplying power to a DC motor, e.g. in combination with the circuit of Figure 2a, because it gives a good efficiency and a possibility of controlling the rotation speed of the motor, if the converter has a variable output voltage. This is illustrated in Figure 3a, where the circuit of Figure 2a is connected to the output of the DC to DC converter 4. However, the current variations from the circuit of Figure 2a will be transferred to the input side of the converter, because when the converter regulates to a certain output voltage, a change in load current will change the regulation point of the converter and thus also its input current. Therefore, the noise will still be present on the input side of the converter. Thus the current from the power source will still have a certain ripple, as it is illustrated in Figure 3b.

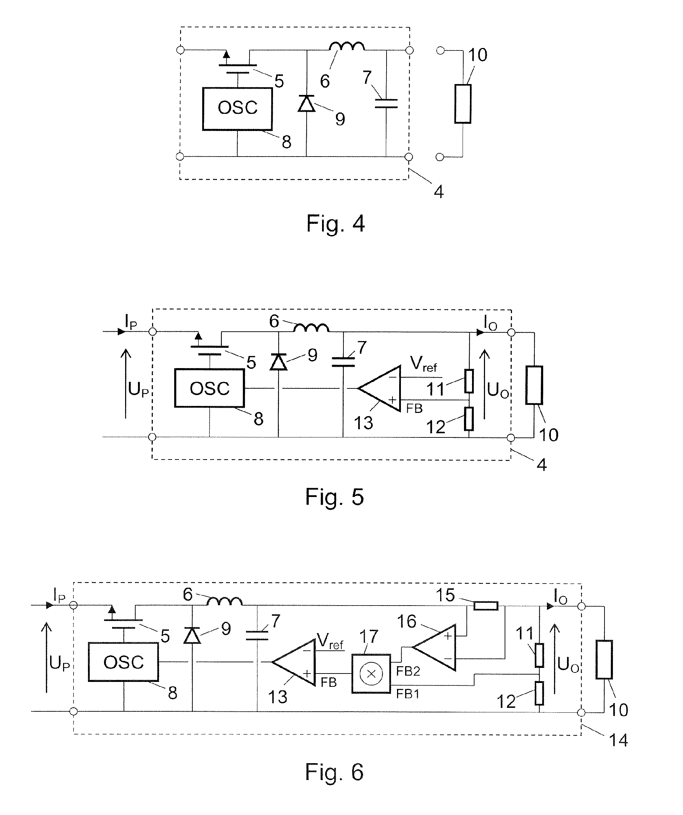

The DC to DC converter 4 can be of any type, such as a linear regulator or a switching regulator. As an example, Figure 4 shows a so-called buck converter, which is a switched mode step-down DC to DC converter based on two switches (typically a MOSFET transistor and a diode), an inductor and often a capacitor. The switch 5 implemented as a MOSFET transistor connects the input voltage to an LC filter formed by the inductor 6 and the capacitor 7 in response to an oscillator 8. When the switch is on, it connects the input voltage to the filter, and when it is off, the diode 9 provides a current return to ground for the inductor, so that the inductor 6 is discharged into the load 10, which corresponds to the motor 1 of the previous figures. The voltage presented to the filter by the MOSFET switch 5 is a rectangular waveform with a duty cycle controlled by the oscillator 8, and the filter then produces an output voltage that is ideally a DC voltage equal to the average value of the rectangular waveform. Thus the duty cycle equals the ratio between the output voltage and the input voltage (regardless of the load current), and by appropriate choice of the duty cycle, the output voltage can be set to a predefined level for a given input voltage.

In principle, the oscillator 8 could thus use a fixed and predetermined frequency and duty cycle, but since the input voltage and other parameters may vary, feedback control is normally used to adjust the duty cycle so that a constant output voltage is maintained. As illustrated in Figure 5, this can be done by a voltage divider with two resistors 11 and 12 and a comparator 13. The voltage from the voltage divider is supplied as a feedback signal FB to one input on the comparator 13 and compared to a reference voltage $V_{ref}$. The output of the comparator is then used as a control signal by the oscillator 8, such that the output voltage $U_O$ is regulated to a constant level defined by the reference voltage $V_{ref}$. This level can thus be changed by changing $V_{ref}$ (or one of the resistors 11 and 12). In a simple form of the oscillator, the comparator output signal is used directly (possibly level-shifted, if needed) to control the MOSFET switch 5, in which case the oscillator is self-oscillating. Another possibility is pulse width modulation, where the oscillator oscillates at a fixed frequency, while the duty cycle is controlled by the comparator output signal. If the voltage from the voltage divider differs from the reference voltage, the duty cycle will be adjusted to compensate for this difference. It is noted that the switching current typically is in the range of e.g. 30 kHz to 5 MHz, which is easily filtered out at the input of the converter.

However, as mentioned in relation to Figure 3a, these converters, with or without voltage feedback, do not prevent the current ripple caused by the load current variations from being transferred to the input side of the converter. With the present invention, however, the converter can be improved to prevent the current ripple from being transferred to the input side of the converter.

Figure 6 shows an example of how this can be done in the DC to DC converter 14. Compared to converter 4 in Figure 5, converter 14 includes a small current sensing resistor 15 through which the output current $I_O$ from the converter flows. The voltage drop created over resistor 15 by the output current $I_O$ is amplified by an amplifier 16 and fed to one input of a multiplier circuit 17 as a feedback signal FB2. The other input of the multiplier circuit 17 is connected to the voltage (feedback signal FB1) from the voltage divider consisting of the resistors 11 and 12, which represents the output voltage $U_O$ from the converter as described before. The output from the multiplier circuit 17, which thus represents the product of the output current and the output voltage from the converter, i.e. the power delivered by the converter, is then fed as the feedback signal FB to the input of the comparator 13 that was previously connected to the voltage from the voltage converter. As before, this voltage is compared with a reference voltage $V_{ref}$ in the comparator 13, and the output of the comparator is then used as a control signal by the oscillator 8. As a result, the converter is now regulated to maintain a constant output power instead of a constant output voltage. Thus if e.g. the load resistance is increased, the output voltage will also be increased in order to maintain the constant power. As it will be explained in further detail below, such regulation prevents the current ripple described above from being transferred to the input side of the converter. For many loads, such as e.g. the DC motor mentioned above, such increase in the voltage is fully acceptable and may even have other advantages than preventing the ripple in the input current.

It is noted that the current sensing resistor 15 as well as the resistors 11 and 12 of the voltage divider introduce small errors. However, in the following it is assumed that the current sensing resistor 15 is small enough and the resistors 11 and 12 are large enough for these errors to be ignored.

Since the input current $I_P$ only flows when the MOSFET switch 5 is on, while the output current continues to flow in the off-period (supplied by the inductor 6 through the diode 9), the average input current equals the average output current multiplied by the duty cycle, and because the duty cycle equals the ratio between the output voltage and the input voltage, it can be seen that the input current is proportional to the output power (output voltage times output current) divided by the input voltage. The input voltage is considered as constant, and thus the input current is proportional to the output power. In other words, if the converter is controlled to maintain a constant output power, the input current will also be constant, and the variations in output current will not be transferred to the input current. This is also true for other converter types, such as e.g. linear converters. With a certain efficiency, the output power and the input power only differ by the dissipation defined by the efficiency, and therefore a constant output power means a constant input power, and again since the input voltage is considered constant, the input current is proportional to the input power and the output power.

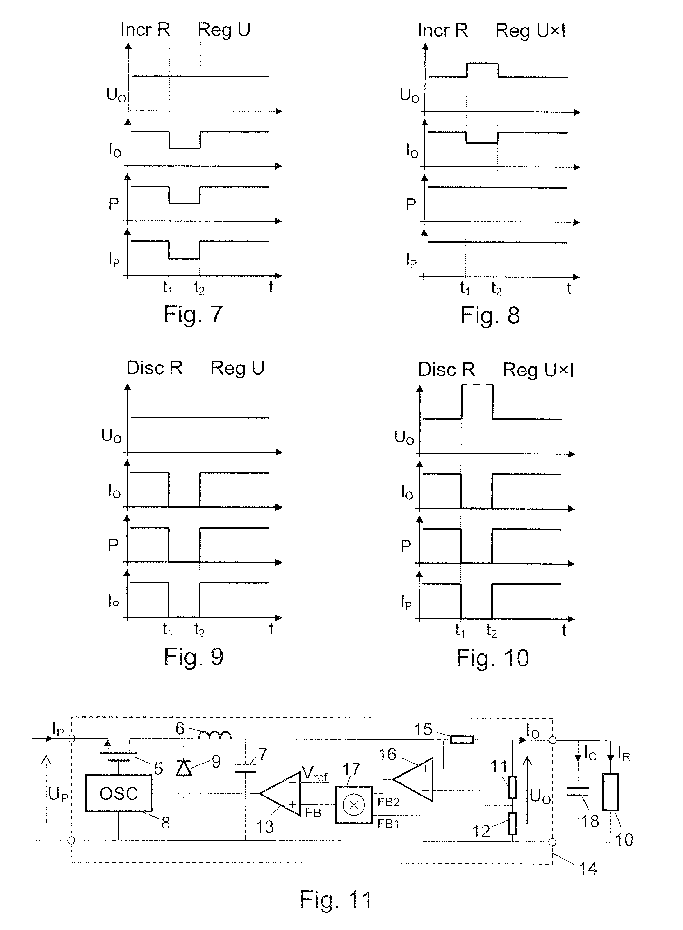

The function of the circuit of Figure 6 compared to that of Figure 5 will now be explained with reference to Figures 7 to 10.

Figure 7 illustrates voltages and currents in the known circuit of Figure 5 when the load resistance is shortly increased to e.g. the double value during the time period from time $t_1$ to time $t_2$. As mentioned, the converter of Figure 5 regulates to a constant output voltage $U_O$. Since the input (or primary) voltage $U_P$ is considered constant, it is not shown in the figure.

Since the converter regulates to a constant output voltage $U_O$, the output current $I_O$, i.e. the current in the load resistor 10, will decrease when the resistance is increased in the period of time from $t_1$ to $t_2$. The output power P from the converter equals the product of the voltage $U_O$ and the output current $I_O$, and because the voltage is constant, the curve for the power will in this case be similar to that of the output current $I_O$. Except for a small loss in the converter, which can be disregarded here, the output power and the input power are identical, and thus the label P designates both. Since both the input voltage $U_P$ and the output voltage $U_O$ are constant during the change, the input (primary) current $I_P$ will experience a decrease similar to that of the power P and thus also similar to that of the inductor current $I_O$, which means that the current variation has been transferred to the input side of the converter.

Figure 8 shows the corresponding voltages and currents for the circuit of Figure 6, i.e. when the converter output is regulated to maintain a constant product of output current $I_O$ and output voltage $U_O$ instead of a constant output voltage $U_O$. It is seen that when the load resistance is increased at time $t_1$, the output current $I_O$ will again be reduced. However, the converter will now maintain a constant power, and therefore the output voltage $U_O$ will increase corresponding to the drop in the output current $I_O$, and the output current $I_O$ will be at a higher level than in Figure 7, so that the product of the output voltage $U_O$ and the output current $I_O$ is maintained at the original level. However, since the input current $I_P$, as explained above, is proportional to the output power, which is now maintained at a constant level, a reduction will no longer be experienced in this current during the period with increased load resistance. When the load resistance at time $t_2$ returns to its original level, the output voltage $U_O$ and the output current $I_O$ will also return to their original levels. It is thus seen that with this circuit the variation in output current $I_O$ is not transferred to the input current $I_P$, which remains constant during the increase in load resistance.

The situation is, however, somewhat different when the load resistance is increased to a higher value or even disconnected for a short period, as it is illustrated in Figures 9 and 10, where a disconnected load resistance is assumed for the two circuits of Figures 5 and 6, respectively.

Comparing Figure 9 to Figure 7 shows that for the known circuit of Figure 5, which regulates to a constant output voltage, a disconnected load resistance just means that the output current $I_O$ is reduced to zero during the disconnected period, and therefore also the other currents are reduced correspondingly. Otherwise, there is no difference between Figure 9 and Figure 7, and again the variation in the output current will be transferred to the input side.

It is noted that in Figure 9, the time from $t_1$ to $t_2$ could for the DC motor mentioned above be the time where the motor current is interrupted as illustrated in Figure 1b. It is further noted that although the time from $t_1$ to $t_2$ is here considered as a short time period, it will normally be a long period compared to the switching frequency. A typical range for the switching frequency is from 30 kHz to 5 MHz, while the frequency of the signal of Figure 1b could be in the order of 100 Hz depending on the rotation speed of the motor.

Reference is now made to Figure 10. When the same situation, i.e. a disconnected load resistance, is applied to the modified circuit of Figure 6 the output current $I_O$ is reduced to zero. Since the converter tries to maintain a constant output power, the output voltage $U_O$ will again increase corresponding to the drop in the output current $I_O$, but as the current is reduced to zero, the converter will try to regulate the output voltage to a very high value. However, most converters have an upper limit for the voltage, e.g. for a step-down converter the output voltage cannot exceed the input voltage. Therefore the regulating circuit is no longer able to maintain a constant output power, and as a result a drop will occur in the power P and the input current $I_P$ corresponding to the drop in the output current $I_O$. Thus in this situation the circuit is not able to prevent variations in the load current from being transferred to the input side. In Figure 10 the output voltage $U_O$ is shown limited to a value about twice its value before the load resistor was disconnected, but this should just be considered as an example. When the load resistor is reconnected at time $t_2$, the converter immediately begins to regulate to a constant power, and therefore the power P and the input current $I_P$ will quickly return to their predetermined values.

This problem, however, can be solved by adding a capacitor 18 in parallel to the load resistance 10 as illustrated in the circuit of Figure 11. The capacity of the capacitor 18 is considerably larger than that of the small capacitor 7, which was designed to form a low pass filter together with the inductor 6 at the much higher switching frequency. Determining the size of the capacitor 18 is described later. The sum of the capacitor current $I_C$ and the load current $I_R$ equals the inductor current $I_O$.

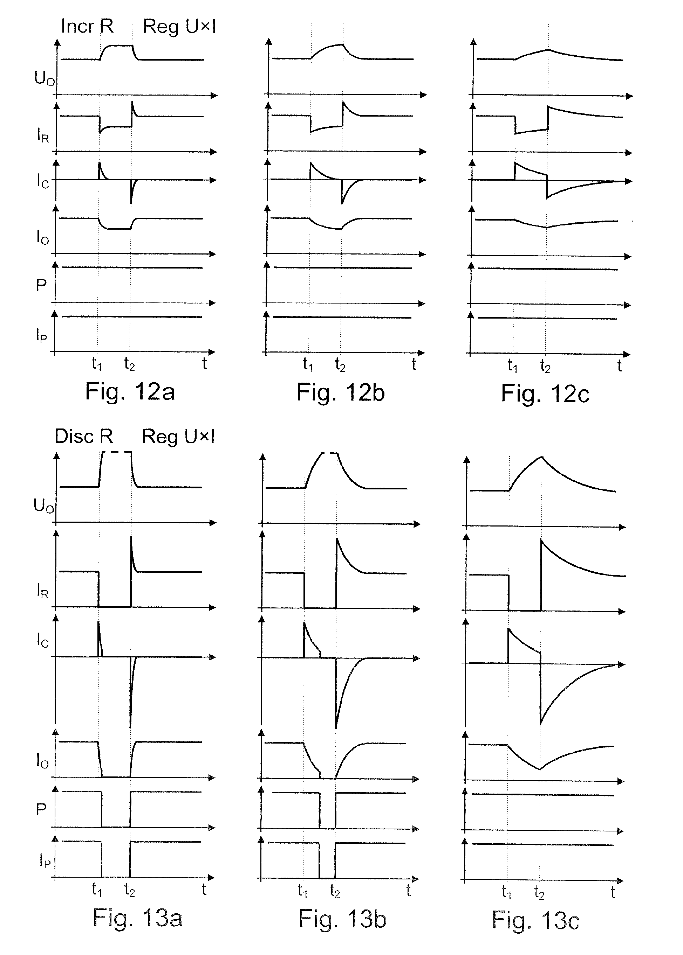

Figures 12a to 12c illustrate voltages and currents in the circuit of Figure 11 for three different values of the capacitor 18 when the load resistance 10 is shortly increased, i.e. corresponding to Figure 8 for the circuit of Figure 6, and correspondingly Figures 13a to 13c illustrate the same voltages when the load resistance 10 is shortly disconnected, i.e. corresponding to Figure 10 for the circuit of Figure 6.

In Figure 12a a relatively small value of the capacitor 18 is assumed. Compared to Figure 8, it is seen that when the converter begins to increase the output voltage $U_O$ in order to maintain the power constant, a current will flow into the capacitor 18 to charge it to the higher voltage. Thus for a short time the capacitor takes some of the current that before the change flowed into the load resistor 10, and therefore the output current $I_O$ from the converter will not drop to its lower level momentarily as in Figure 8, but rather drop slowly corresponding to the charging of the capacitor 18. When the load resistor 10 returns to its original level, the capacitor 18 will discharge some of its energy into the load resistor 10, and therefore again the output current $I_O$ will rise at a lower slope as in Figure 8. Thus the output current $I_O$ will be smoothed by adding the capacitor 18 to the circuit, but since the circuit was also able to maintain a constant input current $I_P$ without the capacitor, as it was shown in Figure 8, there is no real improvement in this situation. The variation in output current $I_O$ is still not transferred to the input current $I_P$.

Figure 12b is similar to Figure 12a, except that the capacitor 18 is assumed to have a somewhat higher capacity, which means that the current spikes in the capacitor have a longer duration, and the output current $I_O$ is further smoothed. An even larger capacity of capacitor 18 is assumed in Figure 12c, where the output current $I_O$ is again further smoothed.

However, when the load resistance is shortly disconnected or increased to a very high level, the capacitor 18 makes a difference, which is illustrated in Figures 13a to 13c.

In Figure 13a a relatively small value of the capacitor 18 is again assumed. As in Figure 10 the output current $I_O$ will be reduced to zero momentarily and the converter will try to regulate the output voltage $U_O$ to a very high value, but due to the capacitor 18, which for a short time takes some of the current that before the change flowed into the load resistor, the output voltage will increase according to the charging of the capacitor, and therefore it takes a short while before the output voltage $U_O$ reaches its upper limit. When this happens, the regulating circuit is no longer able to maintain a constant output power, and the output current $I_O$ as well as the power P and the input current $I_P$ will drop to zero. Thus compared to Figure 10, this drop has been delayed for a short period of time.

From Figure 13b, where the capacitor 18 is assumed to have a somewhat higher capacity, it can be seen that with a higher capacity the capacitor 18 can take current for a longer time, and it will take a longer time before the output voltage $U_O$ reaches its upper limit. Therefore, for a longer part of the period the circuit will still be able to maintain a constant output power before the output current $I_O$ is reduced to zero. In this part of the period the input current $I_P$ will also be unchanged, but when the upper voltage limit is reached, the drop in the input current $I_P$ will occur.

In Figure 13c the capacitor 18 is large enough to ensure that the upper voltage limit is not reached before the load is reconnected at time $t_2$, and therefore the product of output voltage $U_O$ and output current $I_O$ can be maintained constant during the period from $t_1$ to $t_2$ where the load is disconnected, and therefore also the input current $I_P$ will be constant. It is therefore seen that when the load current may be reduced to zero or a small value for a short period, a capacitor sufficiently large to take the current for that period can ensure that also in this situation the circuit of Figure 11 can prevent such current variations from being transferred to the input side of the converter.

In Figure 13c the output voltage $U_O$ is shown to reach a level of about twice its original level before the load resistor is reconnected, but in a practical solution the size of the capacitor 18 could typically be selected so that the output voltage $U_O$ does not increase more than a certain amount, e.g. 10 percent during the load interruption.

The size of the capacitor 18 should be selected so that it is sufficient to store the amount of energy that would have been delivered to the load resistance if it had not been disconnected while still keeping the output voltage within the acceptable limit. In Figure 13c the amount of energy to be stored is $P \cdot (t_2 - t_1)$. The energy stored in a capacitor when its voltage is increased from $U_1$ to $U_2$ is $\frac{1}{2} C (U_2^2 - U_1^2)$, where $U_1$ is the voltage at time $t_1$ and $U_2$ is the voltage at time $t_2$. Therefore, it can be seen that

$$P \cdot \left( t_2 - t_1 \right) = \frac{1}{2} C \left( U_2^2 - U_1^2 \right),$$

and that

$$C = \frac{2P \cdot \left( t_2 - t_1 \right)}{U_2^2 - U_1^2}.$$

Thus, as an example, if P=1W, $U_1$=8V, $U_2$=8.8V (i.e. $U_1$ +10%) and $t_2$-$t_1$ is 1/30 of the period of a 100Hz signal, a capacitor of 50 $\mu$F would be sufficient to store the disconnected amount of energy. This is a capacitor much smaller than the one needed in e.g. Figure 2 to attenuate the ripple to an acceptable level.

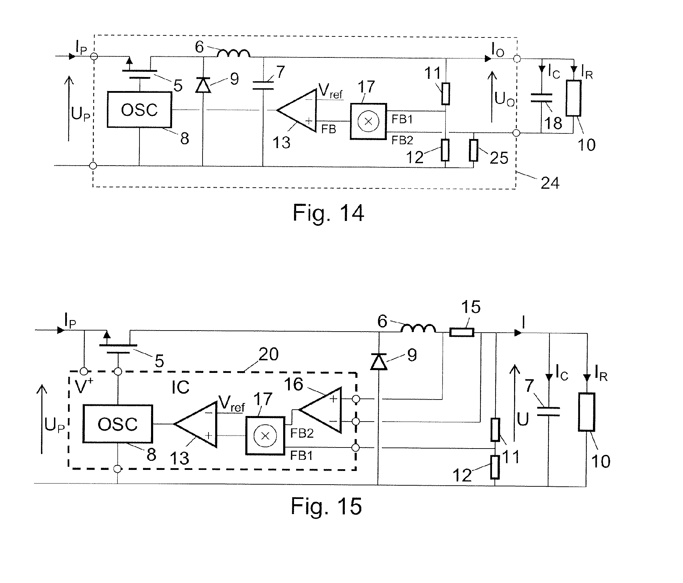

In Figures 6 and 11 the current sensing resistor 15 is shown in the positive connection from the inductor 6 to the load 10, and the voltage drop created over the current sensing resistor by the output current $I_O$ is amplified by the amplifier 16. However, the current sensing resistor could just as well be arranged in the negative connection from the load 10 and back to the converter. This is illustrated in the converter 24 in Figure 14, where the current sensing resistor 25 is placed in the return connection. In this way the voltage drop over the resistor can be used directly as the feedback signal FB2, because it is related to the same reference as the voltage from the voltage divider. Thus the amplifier 16 can be omitted.

The multiplier circuit 17 can be implemented in a number of different well known ways. One possibility is a pulse width/pulse height multiplier, in which one input signal controls the width or the duty cycle of a pulse train, while the other input signal controls the amplitude of the pulse train. When the pulse train is then passed through a low-pass filter the resulting DC component is proportional to the product of the two input signals. The two analog signals can also be converted to digital signals and multiplied in a digital multiplier, before the resulting signal is converted back to analog form. Also several integrated circuits capable of performing the multiplying function are commercially available.

Above, the invention is described in relation to a so-called buck converter, which is a switched mode step-down DC to DC converter. However, the invention can also be used in combination with any other type of regulated DC supply. Of other switched mode converters, a boost converter, which is a step-up converter, and a buck-boost converter, in which the output voltage is of the opposite polarity as the input voltage, can be mentioned. Linear regulators can be used as well as switched mode converters, and also AC to DC power supplies as long as they are arranged to provide a regulated DC output voltage.

As mentioned earlier, the invention can have other advantages than preventing load current variations from being transferred to the input side of a converter. As an example, it can be mentioned that in cooling systems for electronic equipment several fans are often connected in parallel to provide sufficient cooling. If one of these fans is interrupted, e.g. due to a failure, the converter regulating to constant output power will increase the voltage so that the remaining fans continue to deliver an unchanged cooling power. Further, it is noted that with several fans in parallel, it is very unlikely that the current interruptions of the individual motors will occur simultaneously. Therefore the load current will not be interrupted, only reduced when one of the motors is interrupted, and thus the size of the capacitor described above in relation to Figures 12a-c and 13a-c can be reduced, because the situation will correspond to e.g. Figure 12b rather than e.g. Figure 13b. Thus, as an example, in a system with three fans the capacitor need not be three times as large as for a system with only one fan.

Further, converters according to the invention can be used for many other applications than the DC motors described above. For any load having current variations, and for which a voltage increase is acceptable, it will be advantageous to regulate the output to maintain the product of output voltage and output current constant. Lighting devices could be another example. Also in many start-up situations the invention would be advantageous, e.g. the start up of hard disk drives, other devices driven by motors or capacitive loads, where a very high inrush current could be expected. Regulating the converter to a constant output power would ensure a softer start-up of such devices. Also battery chargers could benefit of the invention.

The circuit of Figure 6 (and also those of Figures 11 and 14) can be implemented as an integrated control circuit in combination with a number of external components. An example of this is illustrated in Figure 15. The oscillator 8, the comparator 13, the multiplier 17 and the amplifier 16 are here arranged on an integrated control circuit 20, while the remaining components are external components that can be connected to the integrated controller 20, which differs from a usual control circuit by having three feedback terminals instead of the usual one feedback terminal. The function is the same as in Figure 6. Other embodiments of the integrated control circuit are also possible. In one other embodiment the amplifier 16 could also be an external component (or it could be avoided as in Figure 14), so that the integrated circuit has two feedback terminals. It could also be possible to include the MOSFET switch 5 and/or the diode 9 on the integrated control circuit.

Although various embodiments of the present invention have been described and shown, the invention is not restricted thereto, but may also be embodied in other ways within the scope of the subject-matter defined in the following claims.

**Claims**

1. A method of supplying a DC voltage to a load (10) from a supply circuit (14), wherein the supplied DC voltage is controlled in dependence on a control signal generated from a first feedback signal (FB1) indicative of the supplied DC voltage, **characterized in that** the method further comprises the steps of:

   • determining a second feedback signal (FB2) indicative of a current supplied from the supply circuit (14);
   • multiplying said first feedback signal (FB1) by said second feedback signal (FB2) to obtain a multiplied signal; and
   • generating said control signal from said multiplied signal.

2. A method according to claim 1, **characterized in that** the step of determining a second feedback signal (FB2) comprises:

> • measuring a voltage drop over a current sensing resistor (15) arranged to be passed by said current supplied from the supply circuit (14); and
> • amplifying said voltage drop in an amplifier (16).

**3.** A method according to claim 1 or 2, **characterized in that** the method further comprises the step of arranging a capacitor (18) in parallel to the load (10).

**4.** A method according to claim 3, **characterized in that** the capacitor (18) is selected to have a capacity sufficient to store an amount of energy corresponding to a given temporary current drop in the load (10).

**5.** A circuit (14) configured to supply a DC voltage to a load (10), wherein the supplied DC voltage is controlled in dependence on a control signal generated from a first feedback signal (FB1) indicative of the supplied DC voltage,
**characterized in that** the circuit further comprises:

> • means (15, 16) for determining a second feedback signal (FB2) indicative of a current supplied from the supply circuit;
> • means (17) for multiplying said first feedback signal (FB1) by said second feedback signal (FB2) to obtain a multiplied signal; and
> • means (8, 13) for generating said control signal from said multiplied signal.

**6.** A circuit according to claim 5, **characterized in that** the means for determining a second feedback signal (FB2) comprises:

> • a current sensing resistor (15) arranged to be passed by said current supplied from the supply circuit (14); and
> • an amplifier (16) arranged to amplify a voltage drop over said current sensing resistor (15).

**7.** A circuit according to claim 5 or 6, **characterized in that** the circuit further comprises a capacitor (18) arranged in parallel to the load (10).

**8.** A circuit according to claim 7, **characterized in that** the capacitor (18) is selected to have a capacity sufficient to store an amount of energy corresponding to a given temporary current drop in the load (10).

**9.** A circuit according to any one of claims 5 to 8, **characterized in that** the circuit is a DC to DC converter.

**10.** A circuit according to claim 9, **characterized in that** the DC to DC converter is a linear converter.

**11.** A circuit according to claim 9, **characterized in that** the DC to DC converter is a switched mode converter.

**12.** A circuit according to claim 11, **characterized in that** the DC to DC converter is a buck converter.

**13.** A circuit according to any one of claims 5 to 8, **characterized in that** the circuit is an AC to DC converter.

**14.** An integrated circuit (20) comprising control circuitry for a circuit according to any one of claims 5-13, **characterized in that** the integrated circuit comprises the means (17) for multiplying the first feedback signal (FB1) by the second feedback signal (FB2).

**15.** Use of the circuit according to any one of claims 5-13 for reducing noise in supply lines from a DC voltage source to a DC motor, **characterized in that** the circuit is connected between the DC voltage source and the DC motor.

Fig. 1a

Fig. 1b

Fig. 2a

Fig. 2b

Fig. 3a

Fig. 3b

Fig. 4

Fig. 5

Fig. 6

Fig. 7

Fig. 8

Fig. 9

Fig. 10

Fig. 11

Incr R    Reg U×I

$U_O$

$I_R$

$I_C$

$I_O$

P

$I_P$

$t_1$  $t_2$    t

Fig. 12a

$t_1$  $t_2$    t

Fig. 12b

$t_1$  $t_2$    t

Fig. 12c

Disc R    Reg U×I

$U_O$

$I_R$

$I_C$

$I_O$

P

$I_P$

$t_1$  $t_2$    t

Fig. 13a

$t_1$  $t_2$    t

Fig. 13b

$t_1$  $t_2$    t

Fig. 13c

EP 2 144 354 A1

Fig. 14

Fig. 15

**EP 2 144 354 A1**

Europäisches Patentamt
European Patent Office
Office européen des brevets

## EUROPEAN SEARCH REPORT

Application Number

EP 08 15 9996

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/263031 A1 (SCHIFF TOD F [US] ET AL) 23 November 2006 (2006-11-23) * paragraphs [0004], [0016], [0018], [0019], [0025], [0026], [0032] * ----- | 1-15 | INV.<br>H02M3/156 |
| X | JP 2004 040976 A (SANSHA ELECTRIC MFG CO LTD) 5 February 2004 (2004-02-05) * abstract * ----- | 1-15 | |
| X | JP 2004 180464 A (HITACHI KOKI KK) 24 June 2004 (2004-06-24) * abstract * ----- | 1-15 | |
| | | | **TECHNICAL FIELDS SEARCHED (IPC)**<br><br>H02M |

The present search report has been drawn up for all claims

| Place of search | Date of completion of the search | Examiner |
|---|---|---|
| Munich | 4 May 2009 | Jansen, Helma |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

**ANNEX TO THE EUROPEAN SEARCH REPORT
ON EUROPEAN PATENT APPLICATION NO.**                          EP 08 15 9996

This annex lists the patent family members relating to the patent documents cited in  the above-mentioned European search report.
The members are as contained in the European Patent Office EDP file on
The European Patent Office is in no way liable for these particulars which are merely given for the purpose of information.

04-05-2009

| Patent document<br>cited in search report | | Publication<br>date | Patent family<br>member(s) | | Publication<br>date |
|---|---|---|---|---|---|
| US 2006263031 | A1 | 23-11-2006 | WO | 2006127389 A2 | 30-11-2006 |
| JP 2004040976 | A | 05-02-2004 | JP | 4237451 B2 | 11-03-2009 |
| JP 2004180464 | A | 24-06-2004 | NONE | | |

EPO FORM P0459

For more details about this annex : see Official Journal of the European Patent Office, No. 12/82